# EUROPÄISCHE PATENTSCHRIFT

(11) **EP 0 924 792 B1**
(45) Veröffentlichungstag und Bekanntmachung des Hinweises auf die Patenterteilung: **10.04.2002**
(21) Anmeldenummer: 98118128.2
(22) Anmeldetag: 24.09.1998
(51) Int. Cl.: H01Q 1/22, H01Q 13/24, G01F 23/284

(54) **Antenneneinrichtung für ein Füllstandmess-Radargerät**
Antenna device for a radar level gauge
Dispositif d'antenne pour une jauge radar de niveau

(30) Priorität: 28.11.1997 DE 19752808
(43) Veröffentlichungstag der Anmeldung: 23.06.1999
(73) Patentinhaber: VEGA Grieshaber KG, 77709 Wolfach (DE)
(72) Erfinder: Fehrenbach, Josef, 77716 Haslach (DE); Motzer, Jürgen, 77654 Offenburg (DE); Lenk, Fritz, 78713 Schramberg (DE)
(74) Vertreter: Patentanwälte Westphal, Mussgnug & Partner

(56) Entgegenhaltungen:
- EP-A- 0 669 673
- DE-A- 19 617 963
- DE-U- 9 312 251

## Beschreibung

Die Erfindung betrifft eine Antenneneinrichtung für ein Füllstandmeß-Radargerät gemäß den Merkmalen des Oberbegriffs des Anspruchs 1.

Antenneneinrichtungen für Füllstandmeßgeräte, die mit Mikrowellen arbeiten, sind hinlänglich bekannt und werden beispielsweise zur kontinuierlichen Füllstandmessung sowohl bei Flüssigkeiten als auch bei Schüttgütern eingesetzt. Das Meßprinzip beruht darauf, kurze Mikrowellenimpulse von einem Hochfrequenzstrahler (HF-Strahler) auszusenden. In einem kombinierten Sende- und Empfangssystem werden die vom Füllgut reflektierten Impulse erfaßt und durch Laufzeitmessung dieser Impulse der Abstand zum Füllgut ermittelt.

Die Einkopplung der Mikrowellen in das Behälterinnere erfolgt über einen geeigneten HF-Strahler, wobei darauf zu achten ist, daß sich im Behälter keinerlei temperatur- sowie korrosionsempfindliche Komponenten der Antenneneinrichtung befinden.

Bei der Verwendung solcher mit Mikrowellen arbeitenden Füllstandmeßgeräte ist es notwendig, eine gute Abdichtung zwischen Behälterinnenraum und dem elektronischen Teil der Antenneneinrichtung zu gewährleisten. Dies ist insbesondere dann wichtig, wenn der Füllstand in Behältern, wie z. B. Industrietanks, bestimmt werden soll, in denen bei hohen oder niedrigen Betriebstemperaturen Unter- oder Überdrücke herrschen und der Behälter explosible und/oder hoch hochaggressive und/oder toxische Medien enthält. Die Antenneneinrichtung muß demzufolge möglichst temperatur-, druck- und korrosionsbeständig ausgebildet sein. Darüber hinaus muß die Antenneneinrichtung den Zulassungsvorschriften zum Einsatz in explosionsgefährdeten Betriebsstätten entsprechen. Die Antenneneinrichtung muß insbesondere den harmonisierten Europäischen Normen "Elektrische Betriebsmittel für explosionsgefährdete Bereiche" bzw. der ElexV Ex-Zone 0 sowie Ex-Zone 1 entsprechen. Ex-Zone 0 umfaßt hierbei Bereiche, in denen gefährliche, explosionsfähige Atmosphäre ständig oder langzeitig vorhanden ist, während die Zone 1 Bereiche umfaßt, in denen damit zu rechnen ist, daß gefährliche explosionsfähige Atmosphäre gelegentlich auftritt.

Um die Mikrowellen möglichst eng gebündelt auf die Füllgutoberfläche zu lenken, werden regelmäßig sogenannte Hochgewinnantennen eingesetzt. Hierbei ist die Divergenz, d. h. der Öffnungswinkel eines Antennenstrahls umgekehrt proportional zu ihrem Größen-/ Wellenlängenverhältnis. Dies hat zur Folge, daß bei gegebener Wellenlänge und diversen konstruktiven Randbedingungen, Öffnungswinkel von einigen Grad bis etwa 40° gebrauchsübliche Dimensionen darstellen.

Eine bei der Füllstandmessung mittels Mikrowellen dank ihrer hohen chemischen Beständigkeit mittlerweile häufig eingesetzte Antenneneinrichtung ist der dielektrische Stabstrahler. Beschrieben sind diese dielektrischen Stabstrahler und deren Funktionsweise als solche beispielsweise in der Druckschrift "IEEE Transactions on Antennas and Propagation", Vol. AP-30, No. 1, Januar 1982, S. 4 - 58. Die dielektrischen Stabantennen bestehen im wesentlichen aus einem Hohlleiter, in den mit einer geeigneten HF-Einkoppeleinrichtung HF-Energie eingespeist wird und an dessen Ende ein sich vorzugsweise verjüngender Stab aus dielektrischem Material sitzt.

Aus dem deutschen Gebrauchsmuster 94 12 243.1 der Anmelderin ist eine solche dielektrische Stabantenne speziell für den Einsatz in einem Füllstandmeß-Radargerät bekannt. Eine hohe chemische Beständigkeit, Druckfestigkeit und Korrosionsbeständigkeit wird dadurch erreicht, daß die dielektrische Stabantenne auf ihrer dem Behälter zugewandten Seite mit einer korrosionsbeständigen und für die elektromagnetischen Wellen durchlässigen Schutzschicht, vorzugsweise aus Email, Kunststoff oder Keramik, überzogen ist. Diese bekannte Konstruktion ermöglicht die Montage der dielektrischen Stabantenne in relativ dünnen Rohrstutzen unter Beibehaltung eines erforderlichen geringen Öffnungswinkels.

Es hat sich herausgestellt, daß der bisherige konstruktive und montagebedingte Aufwand bei solchen zur Füllstandmessung eingesetzten dielektrischen Stabantennen, insbesondere was die Befestigung an einem Behälter anbelangt, verhältnismäßig hoch ist und damit kostenintensiv. Die Stabantenne muß nämlich bisher mit einem eigenen Flansch und darin eingearbeiteten Schrauböffnungen versehen sein, durch welche mittels Schrauben eine Befestigung an einem speziell hierfür vorgesehenen Gegenflansch am Behälterdeckel ermöglicht wird. Bei erfolgter Montage der Stabantenne war diese hierbei feststehend mit dem Behälter und damit unverdrehbar zum Behälter befestigt. Problematisch ist dies insbesondere dann, wenn sich nach erfolgter Montage herausstellt, daß die Stabantenne um die eigene Längsachse gedreht werden muß, um auftretende Störechos auszublenden.

Der Erfindung liegt die Aufgabe zugrunde, die bekannte Antenneneinrichtung für ein Füllstandmeß-Radargerät mit dielektrischem Stabstrahler so weiterzubilden, daß eine einfachere Befestigungsmöglichkeit der Antenneneinrichtung an einem Behälter möglich und damit ein weniger Montageaufwand erfordernder Einsatz der Antenneneinrichtung möglich ist.

Diese Aufgabe wird durch eine Antenneneinrichtung mit den Merkmalen des Anspruchs 1 gelöst.

Weiterbildungen der Erfindung sind Gegenstand der Unteransprüche.

Die Erfindung beruht demnach im wesentlichen darauf, daß als Befestigungseinrichtung eine Überwurfhülse mit Außengewinde vorgesehen ist zur Einschraubmontage in eine Behälteröffnung. In der Überwurfhülse ist ein mindestens teilweise annähernd hohlzylindrisches Innenteil aus dielektrischem Material, welches in Hauptabtrahlrichtung aus der Überwurfhülse herausragt, gehalten. In dem Innenteil sitzt das Hohlleitersystem mit HF-Einkopplungseinrichtung und Hohlleiterrohr. Der Stabstrahler ist in Hauptabstrahlrichtung gesehen am vorderen Ende des Innenteils angeordnet.

Durch Vorsehen eines geeigneten Außengewindes ist es in einfacher Weise möglich, die gesamte Antenneneinrichtung an einer Gewindemuffe oder an einer Flanschöffnung mit Innengewinde einer Behälterwand zu befestigen. Als Außengewinde kann z.B. ein 1 1/2 Zoll-Gewinde vorgesehen werden.

Die erfindungsgemäße Antenneneinrichtung zeichnet sich durch eine einfache Herstellbarkeit bei gleichzeitig einfacher Montagemöglichkeit aus. Zudem ist die Antenneneinrichtung aufgrund des eingesetzten dielektrischen Stabstrahlers chemisch hoch resistent und kann somit auch bei Meßungen von agggressiven Füllgütern eingesetzt werden.

In einer bevorzugten Weiterbildung der Erfindung ist das in der Überwurfhülse gehaltene Innenteil um die eigene Längsachse drehbar gelagert angeordnet. Dies hat den entscheidenden Vorteil, daß sich die Polarisationsrichtung der vorzugsweise linear polarisierten, ausgestrahlten Hochfrequenzwellen bei montierter Antenneneinrichtung durch Drehung des Innenteils samt Hohlleitersystem noch ändern läßt. Dies ist insbesondere dann vorteilhaft, wenn sich bei ersten Versuchsmessungen nach erfolgter Montage herausstellt, daß unerwünscht starke Störechechos auftreten. Durch Drehung des Innenteils samt Hohlleitersystem kann eine Stellung gefunden werden, bei der die Störechos minimiert bzw. sogar ausgeblendet sind. Insgesamt wird also durch die erwähnte Drehbarkeit eine bessere "Lesbarkeit" des Empfangssignals sichergestellt.

Wenn das Innenteil drehbar zur Überwurfhülse gestaltet und folglich als separates Teil ausgebildet ist, ist zweckmäßigerweise zwischen der sich gegenüberliegenden Außenwand des Innenteils und der Innenwand der Überwurfhülse eine Dichtungseinrichtung, z.B. zwei Dichtungsringe, angeordnet.

Es ist jedoch auch möglich, daß das Innenteil und die Überwurfhülse einstückig ausgebildet sind. Die Veränderung der Polarisationsrichtung ist bei dieser Ausführungsform dann möglich, wenn das Hohlleitersystem, also die in der zentrischen Öffnung des Innenteils sitzende HF-Einkoppelvorrichtung samt Holleiterrohr, um ihre Längsachse gedreht wird.

Eine andere Weiterbildung der Erfindung sieht vor, daß sich das Hohlleiterrohr des Hohlleitersystems ebenfalls in Hauptabstrahlrichtung über die Überwurfhülse hinaus erstreckt. Dies hat den Vorteil, daß eine verbesserte Abstrahlcharakteristik der Antenne gewährleistet ist. Ragt nämlich die Vorderkante des Hohlleiterohres durch den Montagestutzen des Behälters hindurch in den Behälterinnenraum und damit gezwungenermaßen auch über die Überwurfhülse hinaus, ergibt sich keine nachteilige Veränderung der Antennencharakteristik durch die Montage.

Die HF-Einkoppelvorrichtung weist zweckmäßigerweise einen topfförmigen, in Hauptabstrahlrichtung offenen Metallmantel auf, der vorzugsweise mit Dielektrikumsmaterial gefüllt ist. In der Seitenwandung des Metallmantels ist eine Öffnung eingearbeitet, durch welche ein mit einer Zuleitung elektrisch verbundener HF-Erregerstift in das Dielektrikumsmaterial radial zur Hauptabstrahlrichtung der Antenne ragt. Zweckmäßigerweise ist hierbei die elektrische Zuleitung an dem Erregerstift über eine Steckverbindung, als Buchse und Stecker, realisiert. Die HF-Einkoppelvorrichtung ist sowohl von der Überwurfhülse als auch von dem Innenteil ringförmig umgeben. Hierdurch ergibt sich gegenüber den bekannten Antenneneinrichtungen mit dielektrischen Stabstrahler keine Beeinflussung der HF-Einkoppelvorrichtung durch die Montage in einem Behälterstutzen.

Die Überwurfhülse besteht vorzugsweise aus Kunststoff. Der dielektrische Stabstrahler und/oder das Innenteil bestehen aus dielektrischen Materialien, zum Beispiel Polystyrol, Polypropylen oder Polytetrafluorethylen (PTFE) oder aus einer Mischung dieser Materialen.

Das im Innenteil eingebettete Hohlleiterrohr wird beispielsweise aus einem mit Dielektrikum gefüllten Metallrohr mit Deckel gebildet. Alternativ könnte hierfür auch ein metallisierter Kunststoffstab verwendet werden. Das Hohlleiterrohr kann mit Luft oder Dielektrikum gefüllt sein.

In einer Weiterbildung der Erfindung weist das Hohlleiterrohr an seinem vorderen Teil einen auf dem Hohlleiterrohr angeordneten Modenschlitz auf. Dieser Modenschlitz ist in einem in Richtung Hauptabstrahlrichtung aus der Überwurfhülse herausragenden Bereich der Wandung des Hohlleiterrohres angeordnet. Der Modenschlitz ist hierbei vorzugsweise orthogonal zur Hauptabstrahlrichtung in die Wandung des Hohlleiterrohres eingearbeitet. Dieser Modenschlitz bewirkt eine bessere Anpassung der Antenne, wodurch beispielsweise sogenannte unerwünschte Phantomechos vermieden oder zumindest reduziert werden können.

Der Modenschlitz ist orthogonal zur Polarisationsrichtung der Antenne angeordnet. Bei korrekter Dimensionierung verhindert er das Entstehen von höheren Moden im Hohlleiter ohne selbst von der Grundwelle zum Strahlen angeregt zu werden. Das Ausklingverhalten der Antenne und somit die Meßsicherheit im Nahbereich wird mit einem solchen Modenschlitz erheblich verbessert.

In einer Weiterbildung der Erfindung ist der Stabstrahler und das Innenteil einstückig ausgebildet. Es ist jedoch auch möglich, den Stabstrahler über eine lösbare Verbindung, zum Beispiel eine Schraubverbindung, an das vordere Ende des Innenteils zu befestigen.

Das Hohlleitersystem der Antenneneinrichtung liegt im allgemein über das HF-Zuleitungskabel auf Schaltungsmasse. Um das Mitführen einer Potentialausgleichleitung bei der Montage des Füllstand-Messgerätes zu umgehen, darf diese Masse nicht mit dem Behälterpotential verbunden sein. Bei der erfindungsgemäßen Antenne ist dies konstruktiv dadurch gewährleistet, daß die Überwurfhülse und das Innenteil aus nicht elektrisch leitfähigem Material bestehen. Das Hohlleitersystem bzw. das Hohlleiterrohr ist dadurch umlaufend gegen den Behälter durch eine Isolierungsschicht, die durch das Innenteil und die Überwurfhülse gebildet ist, isoliert.

Um die Antenneneinrichtung auch in explosionsgefährdeten Bereichen einsetzen zu können, kann der Stabstrahler mit einer elektrisch leitfähigen Beschichtung versehen sein.

Die erfindungsgemäße Antenneneinrichtung wird nachfolgend im Zusammenhang mit drei Figuren an zwei Ausführungsbeispielen näher erläutert. Es zeigen:
- Fig. 1:: eine Schnittansicht eines ersten Ausführungsbeispiels einer Antenneneinrichtung nach der Erfindung,
- Fig. 2:: Detailansichten des in Fig. 1 in der Antenneneinrichtung befindlichen Hohlleitersystems, und
- Fig. 3:: eine ähnliche Schnittansicht wie in Fig. 1 eines zweiten Ausführungsbeispieles.

In den nachfolgenden Figuren bezeichnen, sofern nicht anders angegeben, gleiche Bezugszeichen gleiche Teile mit gleicher Bedeutung.

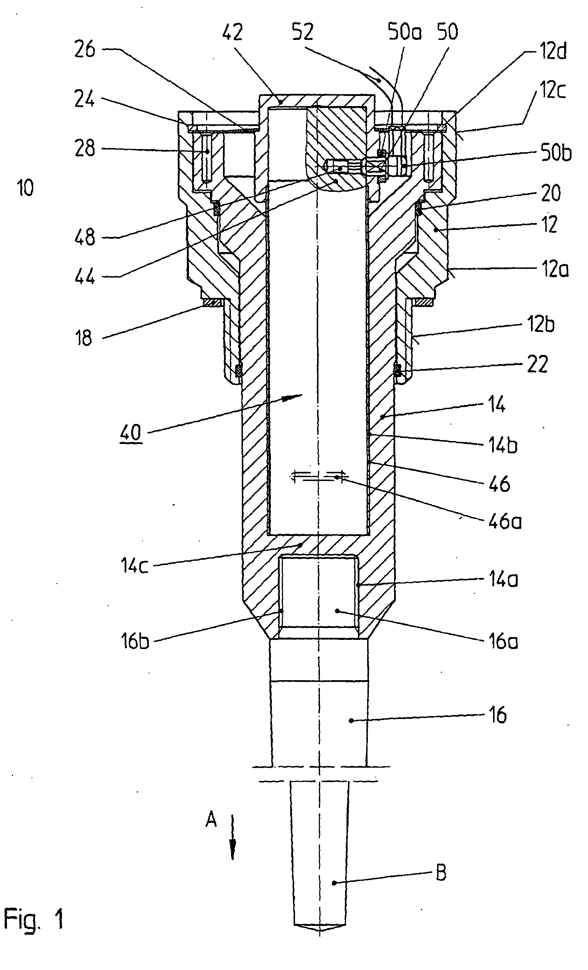

Die in Fig. 1 dargestellte Antenneneinrichtung für ein Füllstand-Radargerät ist mit dem Bezugszeichen 10 bezeichnet und im Längsschnitt dargestellt. Die Antenneneinrichtung 10 weist eine Überwurfhülse bzw. Überwurfmutter 12 auf, welche eine sich von oben her gesehen nach unten entlang der Hauptabstrahleinrichtung A der Antenneneinrichtung erstreckenden, abgestuften Außendurchmesser aufweist. Die Überwurfhülse 12 weist einen mittleren Abschnitt 12a, einen sich nach unten anschließenden verkleinerten Abschnitt 12b und einen sich nach oben anschließenden verbreiteten dritten Abschnitt 12c auf. Die Außenwandung der Überwurfhülse 12 ist im mittleren Abschnitt 12a mit einem Außenvielkant, z. B. einem Sechskant, versehen und im unteren Abschnitt 12b mit einem Außengewinde. Die Außenwandung des dritten Abschnittes 12c hat beispielsweise eine ringförmige, glatte Gestalt. Dank des Außengewindes im unteren Abschnitt 12b ist die im einzelnen noch zu erläuternde Antenneneinrichtung in einfacher Weise in einen Gewindestutzen oder einer Flanschöffnung eines Behälter einschraubbar. An dem mittleren Abschnitt 12a ist ein Schraubenschlüssel ansetzbar, um die Montage zu erleichtern. Die Überwurfhülse 12 besteht aus Metall oder aus elektrisch nichtleitendem Material, z. B. aus Kunststoff. Als Kunststoff ist z. B. Polystyrol, Polypropylen oder Polytetrafluorethylen oder eine Mischung dieser Materialien geeignet. Bei der Montage der Antenneneinrichtung wird auf die vom mittleren Abschnitt 12a zum unteren Abschnitt 12b springende, ringförmige Kante ein Dichtungsring 18 gelegt, um zum Behälter eine dichtende Montage zu ermöglichen.

Innerhalb der Überwurfhülse 12 ist ein mindestens teilweise annähernd hohlzylindrisches, rohrförmiges Innenteil 14 und ein von diesem Innenteil 14 wiederum innen gehaltenes Hohlleitersystem 40 angeordnet. Das Innenteil 14 besteht aus einem dielektrischem Material, z. B. Polystyrol, Polypropylen oder Polytetrafluorethylen oder aus einer Mischung dieser Materialien. Zwischen der Außenwandung dieses Innenteils 14 und der Innenwandung der Überwurfhülse 12 sind in Hauptabstrahlrichtung A axial zueinander beabstandete Dichtungsringe 20, 22 angeordnet. Der Dichtungsring 20 befindet sich in etwa auf der Höhe des Übergangs zwischen dem mittleren Bereich 12a und dem oberen Bereich 12c der Überwurfhülse 12. Der Dichtungsring 22 ist am unteren Ende der Überwurfshülse 12 angeordnet.

Das Innenteil 14 ist rohrförmig gestaltet und weist zwei gegenüberliegende zentrische Öffnungen 14a, 14b auf, welche von einer orthogonal zur Hauptabstrahlrichtung A angeordneten Trennwand 14c getrennt sind. Das Innenteil ist etwa doppel so lang wie die Überwurfhülse 12 und ragt mit ihrem unteren Teil aus der Überwurfhülse 12 heraus. Die obere Öffnung 14b ist deutlich länger gestaltet als die untere Öffnung 14a des Innenteils 14. In der oberen Öffnung 14c sitzt das noch im einzelnen zu erläuternde Hohlleitersystem 40.

Das Innenteil 14 erweitert sich innerhalb der Überwurfhülse 12 entsprechend der Innenkontur der Überwurfhülse 12, so daß das Innenteil 14 beim Einschieben von oben her in der Überwurfhülse 12 anschlägt, wenn das Innenteil 14 vollständig in die Überwurfhülse 12 eingeschoben ist. Ist das Innenteil 14 korrekt in die Überwurfhülse 12 eingeschoben, überragt die Außenwandung der Überwurfhülse 12 am oberen Ende der Antenneneinrichtung 10 etwas das Innenteil 14.

Das Innenteil 14 ist in der Überwurfhülse 12 drehbar gelagert gehalten. Hierfür sitzt auf der oberen Stirnseite des Innenteils 14 eine Federscheibe 26, welche eine mittige, verhältnismäßig große Öffnung, durch welche ein Metallmantel 42 des noch zu erläuternden Hohlleitersystem 40 ragt, sowie kleinere Öffnungen aufweist, durch welche Schrauben in Bohrungen 28 am oberen Ende des Innenteils 14 geführt werden können. Die Federscheibe 26 liegt mit ihrem inneren Rand an einer ringförmigen Nut des Metallmantels 42 des Hohlleitersystems 40 und mit ihrem Außenrand in einer Nut 12d an der Innenwandung der Überwurfhülse 12 auf. Gehalten ist die Federscheibe 26 durch einen in der Nut 12d der Überwurfhülse 12 sitzenden Sprengring 24.

Das bereits erwähnte Hohlleitersystem 40 weist einen topfförmigen Metallmantel 42 auf, dessen Öffnung in Richtung Hauptabstrahlrichtung A zeigt. Der Metallmantel 42 ist ringförmig gestaltet und von einem Deckelteil abgeschlossen. Der Innendurchmesser des Metallmantels 42 entspricht in etwa dem Durchmesser der Öffnung 14b des Innenteils 14. Wie dargestellt, steht das Deckelteil des Metallmantels 42 etwas über der obere Kontur der Überwurfhülse 12 hervor. Die Seitenwandung des Metallmantels 42 erstreckt sich in Richtung Hauptabstrahlrichtung A etwa bis zum unteren Ende des oberen Abschnitts 12c der Überwurfhülse 12. Gefüllt ist der Metallmantel 42 mit einem Dielektrikumsmaterial 44. Der Metallmantel 42 kann beispielsweise aus Messing bestehen.

Von dem Metallmantel 42 erstreckt sich in Richtung Hauptabstrahlrichtung A ein Hohlleiterrohr 46 nach unten über die gesamte Länge der Öffnung 14b des Innenteils 14. Das Hohlleiterrohr 46 kann ebenfalls mit einem dielektrischen Material gefüllt sein. Es ist jedoch auch möglich, daß das Hohlleiterrohr 46 lediglich mit Luft gefüllt ist.

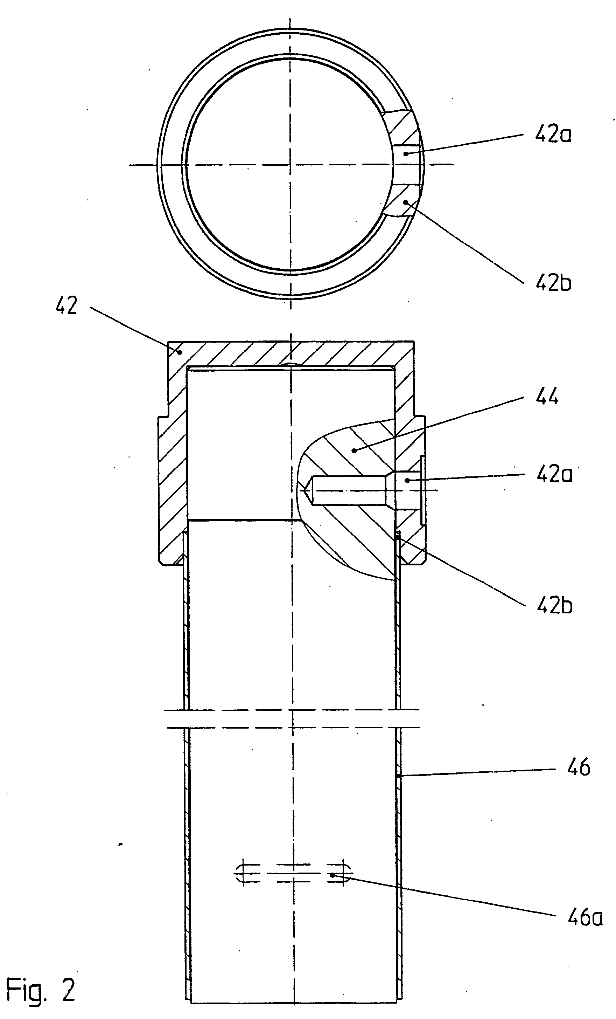

Zur Einkopplung von HF-Energie in die Antenneneinrichtung 10 ist ein Erregerstift 48 vorgesehen; der zur Hauptabstrahlrichtung A gesehen radial in das Dielektrikumsmaterial 44 des Metallmantels 42 ragt. Hierfür weist der Metallmantel 42 eine entsprechende Öffnung 42a, wie diese in Fig. 2 dargestellt ist, auf. Der Erregerstift 48 ist an seinem außerhalb des Metallmantels 42 liegenden Ende über eine Steckverbindung 50 an ein HF-Zuleitungskabel 52 anschließbar. Die Steckverbindung 50 ist beispielsweise so gestaltet, daß der Erregerstift 48 mit einer Buchse 50a und das Ende der HF-Zuleitung 52 mit einem hierzu passenden Stecker 50b ausgestattet: ist.

Wie aus der Darstellung von Fig. 1 besonders deutlich hervorgeht, befindet sich - mit Ausnahme des Deckelteils des Metallmantels 42 - das gesamte Hohlleitersystem 40 innerhalb des Innenteils 14. Der Erregerstift 48 und die zugehörende Steckverbindung 50 sind sowohl von dem Innenteil 14 als auch der Überwurfhülse 12 umgeben. Insbesondere ragt das Hohlleiterrohr 46 deutlich über das Ende der Überwurfhülse 12 hinaus. Hierdurch ergibt sich gegenüber herkömmlichen Antenneneinrichtungen vorteilhafterweise keine Beeinflussung aufgrund der Montage innerhalb eines Behälterstutzens.

Das gesamte Hohlleitersystem 40 ist als Einheit vormontierbar und erst bei der Montage der Antenneneinrichtung in das Innenteil 14 einzusetzen. Das Hohlleitersystem 40 ist innerhalb des Innenteils 14 drehbar angeordnet. Das Hohlleiterrohr 46 liegt an einer an der Innenwandung des Metallmantels 42 befindlichen ringförmigen Nut 42b auf (vgl. Fig. 2). An dem unteren Ende des Hohlleiterrohres 46 ist ein Modenschlitz 46a eingearbeitet, der sich orthogonal zur Hauptabstrahlrichtung A in die Wandung des Hohlleiterrohres 46 befindet. Dies bedeutet zugleich, daß der Modenschlitz 46a 90° zur Polarisation der ausgesandten HF-Wellen angeordnet ist. Der Modenschlitz 46a ist so dimensioniert, daß er das Entstehen von höheren Moden innerhalb des Hohlleiterrohres 46 bei der Ausstrahlung von elektromagnetischen Wellen verhindert ohne selbst von der Grundwelle zum Strahlen angeregt zu werden. Das Ausklingverhalten der gesamten Antenneneinrichtung 10 und damit die Meßsicherheit im Nahbereich wird hierdurch verbessert.

Zum Komplettierung der Antenneneinrichtung ist ein dielektrischer Stabstrahler 16, der aus Polystyrol, Polypropylen oder Polytetrafluorethylen oder einer Mischung aus diesen Materialien bestehen kann, in die untere Öffnung 14a des Innenteils 14 eingeschraubt. Hierfür weist die innere Öffnung 14a ein Innengewinde und der Stabstrahler 16 in seinem Einschraubbereich 16a ein Außengewinde 16b auf.

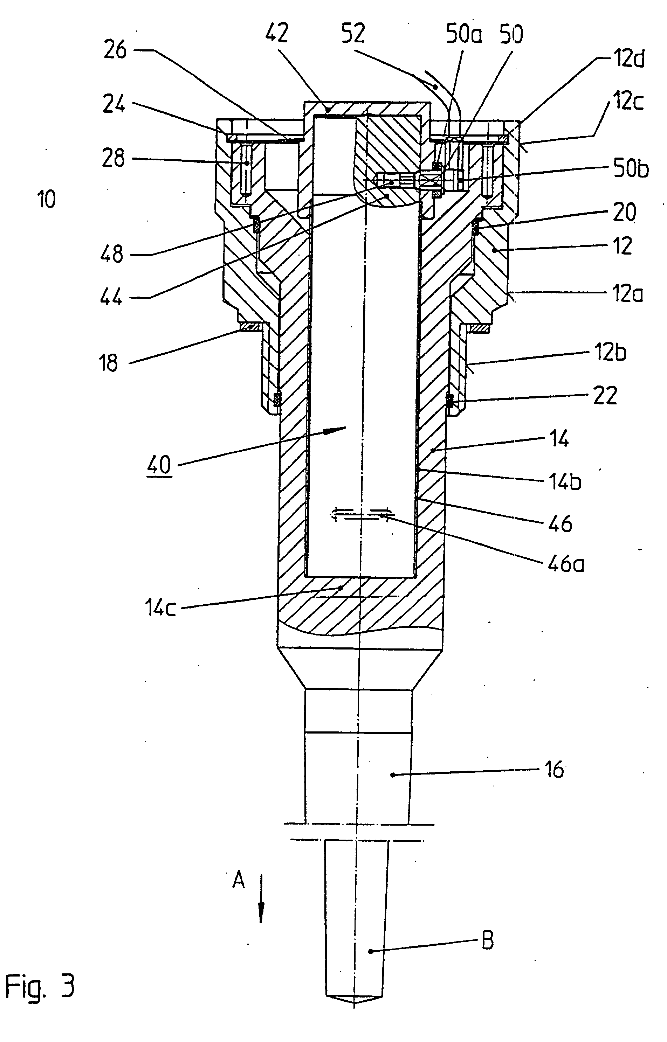

Anstelle dieser zweistückigen Ausbildung von Innenteil 14 und Stabstrahler 16 ist es jedoch ohne weiteres möglich, an das Innenteil 14 einstückig den Stabstrahler 16 anzuformen. Aus Fertigungsgründen empfiehlt sich jedoch die zweiteilige Ausbildung. Die einstückige Ausbildung von Innenteil 14 und Statorstrahler 16 ist in Fig. 3 gezeigt. Im übrigen unterscheidet sich die dortige Einrichtung nicht von der in Fig. 1 dargestellten Antenneneinrichtung.

Um die in Fig. 1 dargestellte Antenneneinrichtung auch in explosionsgefährderten Bereichen einsetzen zu können, kann der Stabstrahler 16 und das Innenteil 14 an ihrer jeweiligen Außenwandung leitfähig beschichtet sein.

### BEZUGSZEICHENLISTE

- 10: Antenneneinrichtung
- 12: Überwurfhülse
- 14: Innenteil
- 16: Stabteil
- 18: Behälterdichtung
- 20: Dichtring
- 22: Dichtring
- 24: Sprengring
- 26: Federscheibe
- 28: Schraubbohrung
- 40: Hohlleitersystem
- 42: Metallmantel
- 44: Füllmaterial
- 46: Hohlleiterrohr
- 48: Erregerstift
- 50: Steckverbindung
- 52: Kabel
- 12a: Abschnitt
- 12b: Abschnitt
- 12c: Abschnitt
- 12d: ringförmige Nut
- 14a: Innengewinde
- 14b: Öffnung
- 14c: Wandabschnitt
- 16a: Einschraubteil
- 16b: Außengewinde
- 42a: Bohrung
- 42b: ringförmige Nut
- 46a: Modenschlitz
- 50a: Buchse
- 50b: Stecker
- A: Hauptstrahlrichtung
- B: Längsachse

## Patentansprüche

1. Antenneneinrichtung für ein Füllstand-Radargerät mit einem dielektrischen Stabstrahler (16) zum Abstrahlen von Mikrowellen entlang einer Hauptabstrahlrichtung (A) und mit einem Hohlleitersystem (40) zum Einkoppeln von HF-Energie in den Stabstrahler (16) sowie mit einer Befestigungseinrichtung zum Befestigen der Antenneneinrichtung an einem Behälter,
**dadurch gekennzeichnet, daß** die Befestigungseinrichtung durch eine Überwurfhülse (12) mit Außengewinde gebildet ist, daß in der Überwurfhülse (12) ein mindestens teilweise annähernd hohlzylindrisches Innenteil (14) aus dielektrischem Material, welches in Hauptabtrahlrichtung (A) aus der Überwurfhülse 12) herausragt, gehalten ist, daß in dem Innenteil (14) das Hohlleitersystem (40) mit HF-Einkopplungseinrichtung(42, 44, 48, 50) und Hohlleiterrohr (46) sitzt, und daß in Hauptabstrahlrichtung (A) gesehen am vorderen Ende des Innenteils (14) der Stabstrahler angeordnet ist. -

2. Antenneneinrichtung nach Anspruch 1,
**dadurch gekennzeichnet, daß** das in der Überwurfhülse (12) gehaltene Innenteil (14) um die eigene Längsachse (B) drehbar gelagert angeordnet ist.

3. Antenneneinrichtung nach Anspruch 1 oder 2,
**dadurch gekennzeichnet, daß** zwischen der sich gegenüberliegenden Außenwand des Innenteils (14) und der Innenwand der Überwurfhülse (12) eine Dichtungseinrichtung, insbesondere zwei Dichtungsringe (20, 22), angeordnet ist.

4. Antenneneinrichtung nach einem der Ansprüche 1 bis 3,
**dadurch gekennzeichnet, daß** sich das Hohlleiterrohr (46) des Hohlleitersystems (40) ebenfalls in Hauptabstrahlrichtung (A) über die Überwurfhülse (12) hinaus erstreckt.

5. Antenneneinrichtung nach einem der Ansprüche 1 bis 4,
**dadurch gekennzeichnet, daß** die HF-Einkopplungsvorrichtung (42, 44, 48, 50) einen topfförmigen, in Hauptabstrahlrichtung offenen Metallmantel (42) aufweist, daß in einer Seitenwandung des Metallmantels (42) eine Öffnung (42a) angeordnet ist, durch welche ein mit einer Zuleitung (52) elektrisch verbundener Erregerstift (48) in den Hohlraum des Metallmantels (42) radial zur Hauptabstrahleinrichtung (A) ragt, und daß die HF-Einkopplungsvorrichtung (42, 44, 48, 50) sowohl von der Überwurfhülse (12) als auch von dem Innenteil (14) zumindest teilweise ringförmig umgeben ist.

6. Antenneneinrichtung nach einem der Ansprüche 1 bis 5,
**dadurch gekennzeichnet, daß** die Überwurfhülse (12) aus Kunststoff oder Metall gebildet ist.

7. Antenneneinrichtung nach einem der Ansprüche 1 bis 6,
**dadurch gekennzeichnet, daß** der dielektrische Stabstrahler (16) und/oder das Innenteil (14) aus Polystyrol, Polypropylen oder Polytetrafluorethylen (PTFE) oder aus einer Mischung dieser Materialien besteht.

8. Antenneneinrichtung nach einem der Ansprüche 1 bis 7,
**dadurch gekennzeichnet, daß** die Überwurfhülse (12) mit einem Außengwinde (12b) und/oder einem Außenvielkant (12a) versehen ist.

9. Antenneneinrichtung nach einem der Ansprüche 1 bis 8,
**dadurch gekennzeichnet, daß** das Hohlleiterrohr (46) in einem in Richtung Hauptabstrahlrichtung (A) aus der Überwurfhülse (12) herausragenden Bereich mindestens einen Modenschlitz (46a) aufweist.

10. Antenneneinrichtung nach Anspruch 9,
**dadurch gekennzeichnet, daß** der Modenschlitz (46a) orthogonal zur Hauptabstrahlrichtung (A) in der Wandung des Hohlleiterrohres (46) sitzt.

11. Antenneneinrichtung nach einem der Ansprüche 1 bis 10,
**dadurch gekennzeichnet, daß** das Innenteil (14) und die Überwurfhülse (12) einstückig ausgebildet sind.

12. Antenneneinrichtung nach einem der Ansprüche 1 bis 11,
**dadurch gekennzeichnet, daß** der Stabstrahler (16) und das Innenteil (14) einstückig ausgebildet sind.

13. Antenneneinrichtung nach einem der Ansprüche 1 bis 11,
**dadurch gekennzeichnet, daß** der Stabstrahler (16) am vorderen Ende des Innenteils (14) lösbar, insbesondere durch Verschraubung, befestigt ist.

14. Antenneneinrichtung nach einem der Ansprüche 1 bis 13,
**dadurch gekennzeichnet, daß** das Hohlleiterrohr (46) ein Metallrohr oder ein mit einer Metallschicht überzogenes nichtmetallisches Rohr ist.

15. Antenneneinrichtung nach einem der Ansprüche 1 bis 14,
**dadurch gekennzeichnet, daß** das Hohlleiterrohr (46) mit Luft oder einem dielektrischen Material gefüllt ist.

16. Antenneneinrichtung nach einem der Ansprüche 1 bis 10,
**dadurch gekennzeichnet, daß** der Stabstrahler (16) mit einer elektrisch leitfähigen Beschichtung versehen ist.

## Claims

1. Antenna device for a radar level gauge with a dielectric rod radiator (16) for radiating microwaves in a main radiation direction (A) and with a waveguide system (40) for coupling HF energy into the rod radiator (16) and with a fixing device for fixing the antenna device to a container, **characterised in that** the fixing device is formed by a coupling sleeve (12) with an external thread, that an at least partially approximately hollow cylindrical inner part (14) made from dielectric material is retained in the coupling sleeve (12) and protrudes from the coupling sleeve (12) in the main radiation direction (A), that the waveguide system (40) with HF coupling device (42, 44, 48, 50) and waveguide tube (46) sits in the inner part (14) and that the rod radiator is arranged at the front end of the inner part (14) when viewed in the main radiation direction (A).

2. Antenna device according to Claim 1, **characterised in that** the inner part (14) retained in the coupling sleeve (12) is mounted so as to be able to rotate about its own longitudinal axis (B).

3. Antenna device according to Claim 1 or 2, **characterised in that** a sealing device, in particular two sealing rings (20, 22), is arranged between the mutually opposing outer wall of the inner part (14) and the inner wall of the coupling sleeve (12).

4. Antenna device according to one of Claims 1 to 3, **characterised in that** the waveguide tube (46) of the waveguide system (40) also extends beyond the coupling sleeve (12) in the main radiation direction (A).

5. Antenna device according to one of Claims 1 to 4, **characterised in that** the HF coupling device (42, 44, 48, 50) has a pot-shaped metal jacket (42), open in the main radiation direction, that an opening (42a) is arranged in a side wall of the metal jacket (42) through which an excitation pin (48) electrically connected to a feed cable (52) protrudes into the cavity of the metal jacket (42) radially to the main radiation direction (A) and that the HF coupling device (42, 44, 48, 50) is at least partially annularly surrounded by both the coupling sleeve (12) and the inner part (14).

6. Antenna device according to one of Claims 1 to 5, **characterised in that** the coupling sleeve (12) is made of plastic or metal.

7. Antenna device according to one of Claims 1 to 6, **characterised in that** the dielectric rod radiator (16) and/or the inner part (14) is/are made of polystyrene, polypropylene or polytetrafluoroethylene (PTFE) or of a mixture of these materials.

8. Antenna device according to one of Claims 1 to 7, **characterised in that** the coupling sleeve (12) is provided with an external thread (12b) and/or an external polyhedral portion (12a).

9. Antenna device according to one of Claims 1 to 8, **characterised in that** the waveguide tube (46) has at least one mode slot (46a) in an area protruding from the coupling sleeve (12) in the main radiation direction (A).

10. Antenna device according to Claim 9, **characterised in that** the mode slot (46a) sits orthogonally to the main radiation direction (A) in the wall of the waveguide tube (46).

11. Antenna device according to one of Claims 1 to 10, **characterised in that** the inner part (14) and the coupling sleeve (12) are formed as a single piece.

12. Antenna device according to one of Claims 1 to 11, **characterised in that** the rod radiator (16) and the inner part (14) are formed as a single piece.

13. Antenna device according to one of Claims 1 to 11, **characterised in that** the rod radiator (16) is fixed in a releasable manner to the front end of the inner part (14), in particular by means of a screw fixing.

14. Antenna device according to one of Claims 1 to 13, **characterised in that** the waveguide tube (46) is a metal tube or a non-metallic tube coated with a metal layer.

15. Antenna device according to one of Claims 1 to 14, **characterised in that** the waveguide tube (46) is filled with air or a dielectric material.

16. Antenna device according to one of Claims 1 to 10, **characterised in that** the rod radiator (16) has an electrically conducting coating.

## Revendications

1. Installation d'antenne pour une jauge de niveau à radar comportant un radiateur-tige diélectrique (16) pour émettre des ondes hyperfréquences dans une direction d'émission principale (A) et un système de guide d'ondes (40) pour coupler de l'énergie HF dans le radiateur-tige (16) ainsi qu'une installation de fixation pour relier l'installation d'antenne à un réservoir,
**caractérisée en ce que**
l'installation de fixation est formée par un écrou chapeau (12) avec un filetage extérieur,
l'écrou chapeau (12) présente une partie intérieure (14) au moins en partie sensiblement cylindrique creuse, en une matière diélectrique qui dépasse de l'écrou chapeau (12) dans la direction principale de rayonnement (A),
la partie intérieure (14) reçoit le système de guide d'ondes (14) avec une installation de couplage HF (42, 44, 48, 50) et le tube guide d'ondes (46), et l'extrémité avant de la partie intérieure (14) dans la direction principale de rayonnement (A) comporte le radiateur-tige.

2. Installation d'antenne selon la revendication 1,
**caractérisée en ce que**
la partie intérieure (14) tenue dans l'écrou chapeau (12) est montée en rotation autour de son axe longitudinal (B).

3. Installation d'antenne selon les revendications 1 ou 2,
**caractérisée par**
une installation d'étanchéité, notamment deux joints d'étanchéité (20, 22) entre la paroi extérieure de la partie intérieure (14) et la paroi intérieure de l'écrou chapeau (12) qui se font face.

4. Installation d'antenne selon l'une des revendications 1 à 3,
**caractérisée en ce que**
le tube guide d'ondes (46) du système guide d'ondes (40) s'étend également dans la direction principale de rayonnement (A) et dépasse de l'écrou chapeau (12).

5. Installation d'antenne selon l'une des revendications 1 à 4,
**caractérisée en ce que**
l'installation de couplage HF (42, 44, 48, 50) comporte une enveloppe métallique en forme de peau (42) ouverte dans la direction principale de rayonnement,
la paroi latérale de l'enveloppe métallique (42) comporte une ouverture (42a) à travers laquelle une tige excitatrice (48) reliée électriquement à une ligne d'alimentation (52) pénètre radialement par rapport à la direction principale de rayonnement (A) dans la cavité de l'enveloppe métallique (42) et
l'installation de couplage HF (42, 44, 48, 50) est entourée de façon annulaire au moins partiellement par l'écrou chapeau (12) et par la partie intérieure (14).

6. Installation d'antenne selon l'une des revendications 1 à 5,
**caractérisé en ce que**
l'écrou chapeau (12) est en matière plastique ou en métal.

7. Installation d'antenne selon l'une des revendications 1 à 6,
**caractérisée en ce que**
le radiateur-tige (16) diélectrique et/ou la partie intérieure (14) sont en polystyrène, polypropylène ou polytétrafluoréthylène (PTFE) ou un mélange de ces matières plastiques.

8. Installation d'antenne selon l'une des revendications 1 à 7,
**caractérisée en ce que**
l'écrou chapeau (12) est muni d'un filetage intérieur (12b) et/ou d'une surface à facettes extérieures (12a).

9. Installation d'antenne selon l'une des revendications 1 à 8,
**caractérisée en ce que**
le tube guide d'ondes (46) comporte, dans sa zone dépassant de l'écran chapeau (12), dans la direction principale de rayonnement (A), au moins une fente de mode (46a).

10. Installation d'antenne selon la revendication 9,
**caractérisée en ce que**
la fente de mode (46a) est réalisée dans la paroi du tube guide d'ondes (46) perpendiculairement à la direction de rayonnement principale (A).

11. Installation d'antenne selon l'une des revendications 1 à 10,
**caractérisée en ce que**
la partie intérieure (14) et l'écrou chapeau (12) sont en une seule pièce.

12. Installation d'antenne selon l'une des revendications 1 à 11,
**caractérisée en ce que**
le radiateur-tige (16) et la partie intérieure (14) sont réalisées en une seule pièce.

13. Installation d'antenne selon l'une des revendications 1 à 11,
**caractérisée en ce que**
le radiateur-tige (16) est fixé de manière amovible à l'extrémité avant de la partie intérieure (14) notamment par une liaison vissée.

14. Installation d'antenne selon l'une des revendications 1 à 13,
**caractérisée en ce que**
le tube guide d'ondes (46) est un tube métallique ou un tube non métallique revêtu d'une couche métallique.

15. Installation d'antenne selon l'une des revendications 1 à 14,
**caractérisée en ce que**
le tube guide d'ondes (46) est rempli d'air ou d'une autre matière diélectrique.

16. Installation d'antenne selon l'une des revendications 1 à 10,
**caractérisée en ce que**
le radiateur-tige (16) est muni d'un revêtement conducteur électrique.
